# EUROPEAN PATENT SPECIFICATION

(11) **EP 4 433 186 B1**
(45) Date of publication and mention of the grant of the patent: **31.12.2025**
(21) Application number: 22818257.2
(22) Date of filing: 15.11.2022
(51) Int. Cl.: A63H 33/04

(54) **SENSOR MODULE FOR A MODULAR TOY CONSTRUCTION SET**
SENSORMODUL FÜR EINEN MODULAREN SPIELZEUGBAUSATZ
MODULE DE CAPTEUR POUR UN ENSEMBLE DE CONSTRUCTION DE JOUET MODULAIRE

(30) Priority: 16.11.2021 DK PA202170564
(43) Date of publication of application: 25.09.2024
(73) Proprietor: LEGO A/S, 7190 Billund (DK)
(72) Inventor: ROSBJERG, Jens Balle, 7190 Billund (DK); THYRRESTRUP, Tobias, 7190 Billund (DK); WELLEJUS, René Christensen, 7190 Billund (DK); LEACH, Louis Elwood, 7190 Billund (DK); GUZINSKI, Grischa Simon, 7190 Billund (DK)
(74) Representative: Guardian IP Consulting I/S
(86) International application number: PCT/EP2022/081872
(87) International publication number: WO 2023/088858

(56) References cited:
- US-A1- 2018 193 998
- US-A1- 2021 197 096
- US-B1- 6 547 624
- US-B2- 10 625 173

## Description

The present disclosure relates to a sensor module for a modular toy construction set having one or more optical sensors, one or more apertures through which light is received by the one or more optical sensors, and a plurality of separate indicator lights, wherein the indicator lights are configured to light up in an illumination pattern in response to a determination of the location of a recognised object within the field of view of at least one of the one or more optical sensors.

Further, the disclosure relates to a method of aiding a user of a modular toy comprising a sensor module.

### BACKGROUND OF THE INVENTION

Objects present within the field of view of an optical sensor, such as e.g. a camera, or a LIDAR sensor, or a combined LiDAR and visual image camera, may be recognised using image recognition algorithms and this is used widely in electronic devices comprising e.g. a camera. In devices, which have a screen on which information for the user may be presented, the screen can show the user which objects within a recorded image are recognised and where, for example by showing the recorded image as a live feed and overlaying the image of the object with the outline of a bright red square.

In certain play situations, such as playing with a toy construction set, a screen may be inappropriate for a variety of reasons and so this way of aiding the user in knowing that an object has been recognised and where the recognised object is within the field of view of the optical sensor, is missing. A user, such as a child, playing with such a toy may be frustrated as it thinks that it is showing an object to be recognised within the viewing angle of the optical sensor, but in reality the object is outside of what is seen by the optical sensor and the expected response due to the recognition is lacking.

Further, in situations where a sensor module for a modular toy construction set is being used to train a neural network to recognise new objects, a lack of feedback to the user that an object has been recognised is troublesome.

Thus, there is a need in the art for a sensor module for a modular toy construction set, wherein the above-mentioned disadvantages are mitigated or removed.

US2021197096 discloses a sensor module for a modular toy construction set, the sensor module comprising one or more optical sensors, one or more apertures through which light is received by the one or more optical sensors

### SUMMARY OF THE INVENTION

In a first aspect is provided a sensor module for a modular toy construction set and in a second aspect is provided a method of aiding a user using a modular toy comprising a sensor module.

In the first aspect, the sensor module for a modular toy construction set comprises one or more optical sensors, one or more apertures through which light is received by the one or more optical sensors, and a plurality of separate indicator lights, wherein the indicator lights are configured to light up in an illumination pattern in response to a determination of the location of a recognised object within the field of view of at least one of the one or more optical sensors.

The sensor module for a modular toy construction set as disclosed herein has a plurality of separate indicator lights, which are configured to light up in an illumination pattern in response to a determination of the location of a recognised object within the field of view of one or more optical sensors. This allows for the user, such as a child, to have feedback from the sensor module when the user is showing the sensor module an object to be recognised. The feedback provided to the child is thus advantageously disconnected from the type of feedback that might be provided by a screen, which requires either a screen being connected to the modular toy or that a screen is built into the toy thus increasing its cost and possibly reducing its durability. A separate screen connected to the toy means that the child has to look away from the toy, and thereby look away from the optical sensor, to get the feedback. By looking away from the modular toy the child can no longer directly correlate the position and movement of an object in view of the optical sensor with the feedback, and if the object is positioned on the child itself, for example recognition of a part of the child's face, looking away may cause the object to no longer be recognised.

The separate indicator lights may be shaped and sized such that they are readily perceivable as separate, individual indicator lights by the user. The indicator lights have macroscopic dimensions adapted for use in the context of direct human interaction, i.e. the indicator lights are preferably dimensioned to provide a light-emitting area in the range of millimetres and/or centimetres. While indicator light dimensions down to 0.5 mm are conceivable, a minimum dimension of at least 1 mm, at least 2 mm, or at least 3 mm is desirable in order to properly resolve and distinguish the individual indicator lights. Thus, in some embodiments, at least one of the dimensions of any one of the indicator lights is greater than or equal to 0.5 mm, such as greater than or equal to 1 mm, such as greater than or equal to 2 mm, such as greater than or equal to 3 mm. An upper limit for the dimensions of the indicators lights is determined by the size of the sensor module and other sensor module components taking up space such as e.g. a camera lens. In some embodiments, the separate indicator lights are spaced apart from each other, in particular such that they are perceivable as separate indicator lights by the user. To this end, in some embodiments, the separate indicator lights may be spaced apart from each other by at least 0.5 mm, such as at least 1 mm, at least 2 mm, or at least 3 mm. An upper limit for the relative distance between the separate indicator lights is determined by the size of the sensor module and other sensor module components taking up space such as e.g. a camera lens.

The indicator lights, although separate lighting elements, may be arranged, for example in light strips. The indicator lights may be e.g. LEDs or other similar suitable lighting elements. The indicator lights may light up in white or in colour and some or all may light up in different colours. When the indicator lights illuminate they may do so in varying lumen in comparison to each other. An indicator light may vary in brightness at different times and/or between different illumination patterns, i.e. it may be brighter or dimmer at a given instant compared to another instant. The Illumination pattern may be comprised of a single indicator light being lit or it may be comprised of two or more indicator lights being lit at the same time or in a time sequence. According to some embodiments, the illumination pattern may comprise animated light effects, such as running or blinking lights, colour effects and/or any combinations thereof.

An optical sensor may be passive or active, where passive optical sensors measure reflected light, and active optical sensors measure the backscatter reflected light from their own source of light. In this sense, an everyday camera recording light in the visual range becomes a hybrid of a passive and active sensor, when it uses a flash. A passive optical sensor in the sensor module may measure e.g. infrared light, visual light, ultraviolet light, etc. An active optical sensor in the sensor module may be a LiDAR sensor. In some embodiments, the one or more optical sensors comprises an active sensor, such as a LIDAR sensor, and/or the one or more optical sensors comprises a passive sensor, such as a camera.

It may be advantageous to make use of a combination of active and passive optical sensors as each typically have advantages and disadvantages. For example, a LiDAR sensor can easily extract geometric features and determine distances, but cannot detect colours, and therefore cannot distinguish features, where a colour difference is the only distinction, such as reading text. Camera sensors, such as colour cameras, on the other hand can easily recognize colours and therefore distinguish a type of features, which LiDAR sensors cannot. Thus, in some embodiments, the one or more optical sensors comprises a LiDAR sensor and a camera, such as a colour camera.

An image recorded by the optical sensor in the sensor module is a 2D or 3D representation of the objects within the 3D field of view of the optical sensor. The field of view (FOV) of the an optical sensor is the part of the world that is visible to the optical sensor at a particular position and orientation in space and the FOV is given as the angular size of the view cone, or, in the case of LIDAR, the angle in which LIDAR signals are emitted is usually referred to as the FOV. Objects, which are within the FOV are recorded by the optical sensor, while those that are outside the FOV are not. If a camera recording visual images is used together with a LiDAR sensor, FOV of the LiDAR is commonly chosen to match the FOV of the visual image camera.

Passive optical sensors usually record the light from objects within their FOV onto an image plane. In digital cameras the surface of the digital image sensor, e.g. a CCD or other, is the image plane of the camera. Through the lens of the camera light from objects within the FOV is projected onto the image plane. An active optical sensor has more information about the reflected light that it measures and may therefore extract more data such as e.g. a 3D position of a point within the FOV.

Determination of the location of a recognised object within an image recorded by the sensor module may be done using any of a variety of image recognition algorithms as known in the art and the recognised objects may, for example, be tags, toy figures, toy construction models or elements, such as toy construction bricks of a particular colour or shape, facial features, etc., and part of the determination may comprise detection of e.g. a colour, or a movement. Examples of suitable recognition algorithms include the method of recognition toy objects described in WO 2016/075081, known methods for detecting QR codes or similar visually detectable codes, such as bar codes, matrix codes, and/or the like.

The indicator lights may respond particularly to facial recognition, for example, when the recognised object is recognised as a face, or when the recognised object is recognised as a particular face, not just as a face. Thus, in some embodiments, the indicator lights are further configured to illuminate in response to a determination that the recognised object is a face, and/or the indicator lights are further configured to illuminate in response to a determination that the recognised object is a particular face.

By "recognised object" is meant that the system has identified and located the object within an image of the field of view of an optical sensor in the sensor module. The entire object need not be within the field of view of the optical sensor, as the system may be configured to identify and locate partially visible objects or to identify and locate parts of objects in themselves. For example, in the case of a humanoid toy figure, it may be possible to identify and locate an arm, a hand, the head, or other part of the toy figure without the entire toy figure being within the field of view of the optical sensor. Similarly, if the entire object is e.g. a child, it may be possible to identify and locate an ear, a nose, an arm, or other part of the child without the full figure of the child being within the FOV of the optical sensor. Some parts of a whole object are then recognisable objects in themselves and the system may be further configured to know that the recognisable parts may be part of a larger object. In this case, the indicator lights will light up in an illumination pattern in response to the determination of the location of the recognised object, e.g. the arm, the hand, the head or other part of a toy figure, within the field of view of the optical sensor.

Thus, in some embodiments, the recognition of an object comprises determining whether the recognised object is part of a larger object. The determination of whether the recognised object is part of a larger object comprise a determination of a likelihood of the recognised object being part of a larger object.

The objects that can be recognised by the sensor module may be classified such that an object may be identified as belonging to a class or a sub-class. For example, an object may be identified as being a person or a face, as a class, or, as a sub-class, as a particular person or face, or a toy figure, as a class, or, as a sub-class, be identified as being a particular type of toy figure.

The sensor module may also be configured to identify the object as one having a machine-readable code associated with it, e.g. a QR-code. In this case, the indicator lights may be further configured to indicate by their illumination pattern, which may comprise animated light effects, colour effects and/or any combinations thereof, that a machine-readable code has been identified.

Again, the system may be able to identify an object as being part of a larger object, which has a machine-readable code associated with it. Thus, even though the entire machine-readable code is not within the field of view of the sensor module the system may recognise the object and the indicator lights will then light up in an illumination pattern in response to the determination of the location of the recognised object. Thus in an embodiment, the indicator lights may be further configured to indicate by their illumination pattern, which may comprise animated light effects, colour effects and/or any combinations thereof, that an object comprising part of a machine-readable code has been identified.

The illumination pattern will serve to aid a user in positioning an object within the field of view and therefore, recognition of an object that is a part of a larger object means that the user will be able to use the feedback from the indicator lights when just the recognised part is within the field of view of an optical sensor in the sensor module. This may aid the user in proper positioning of the entire object so as to facilitate recognition of not just the part of the whole, but of the entire object.

The indicator lights may increase or decrease their brightness, together or individually, according to the distance between the recognised object and the sensor module. For example, if the recognised object is determined to be at a first distance from the sensor, the one or ones of the indicator lights, which are lit may have a first brightness, and if the recognised object moves so that the distance increases or decreases, the lit indicator light(s) may dim or brighten, respectively. Thus, in some embodiments, the indicator lights are further configured to illuminate in such a way that the brightness of any of the one or more illuminated indicator lights on the sensor module correlates with a determined distance between the sensor module and the recognised object. The distance between the sensor module and the recognised object may be determined using any of a number of methods, such as LiDAR ranging, or how much of the FOV is taken up by the recognised object.

If any of the one or more optical sensors can determine a colour of the recognised object, the indicator lights may correlate with a determined colour. For example, if a recognised object is red, or part of a recognised object is red, one or more illuminated indicator lights on the sensor module may light up in red. Similarly, if at least part of the recognised object is blue, one or more illuminated indicator lights on the sensor module may light up in blue, etc. Thus, in some embodiments, the indicator lights are further configured to illuminate in such a way that the colour of any of the one or more illuminated indicator lights on the sensor module correlates with a determined colour of at least part of the recognised object.

The purpose of the macroscopic indicator lights is to provide an interactive guidance to the user, such as a child, during play wherein image recognition plays a part. The sensor module as part of a modular toy construction set may form part of a variety of toy construction models. The sensor module may be part of a particular set of modular toy construction elements or be a separate element, which is configured to fit with other pre-existing modular toy construction elements. Modular toy construction elements are often configured to releasably interconnect or interlock with each other in some way and the modular toy construction set may, for example, be a building block set.

The sensor module may comprise one or more coupling elements configured for releasably interconnecting the sensor module with known toy construction elements in order to facilitate a modular and easily expandable play experience with the sensor module. Thereby, the sensor module may easily be added to a toy construction model as an integral part, or as a retrofit.

An optical sensor, whether passive or active, will receive light through an aperture such as the aperture of a lens on a camera. The aperture may be located on a first side of the sensor module, and at least in the case of a camera, this would generally be referred to as the front of the camera. Thus, the side with the one or more apertures will be referred to as the front of the sensor module. A synergetic effect is achieved by the sensor module being a modular toy construction element as the releasable interlock element(s), used to connect the sensor module to other modular toy construction elements, may be configured such that the user, e.g. a child, is incentivized to connect the sensor module such that the one or more apertures are visible. This could, for example, be achieved by only having one or more interlock elements on any of the sides of the sensor module, but not on the side, where the one or more apertures are located. Moreover, when the indicator lights are located on the same side of the sensor module, the sensor module may be integrated in different toy construction models in a variety of ways, as few, if any, additional limitations are imposed on the placement and interconnection of the sensor module in order to ensure visibility of the indicator lights during operation of the sensor module as part of a toy construction model.

The sensor module may, for example, form part of a motion-enabled construction toy, such as a robotic toy construction set from which a toy robot may be constructed, the robot being autonomous or semi-autonomous and capable of carrying out series of actions automatically. The toy robot may further be configured to be mobile and may have moving parts such as e.g. actuators, which allows the toy robot to move about and interact with its environment. If the toy robot has a humanoid shape, the sensor module could, for example, be part of the robot's head. In a play situation, a user, e.g. a child, may interact with the toy construction robot via the sensor module and receive feedback from the toy robot via the indicator lights. For example, the child could show the toy robot an item and know from the response of the indicator lights whether the item was recognised, and thereby also know that the object is within a FOV of an optical sensor in the sensor module. Perhaps the recognised item is used to instruct the robot and the child will again know whether the instruction was received. It could be that a series of instructions were given to the construction toy robot in this manner and the child can be sure that each instruction was received in the order the instruction items were presented. A mobile construction toy robot having the sensor module could be instructed to move to a location and then search for an item and the child will know from the feedback given by the indicator lights when the item was found.

The sensor module may comprise a power supply such as a battery and/or be configured to be powered by one or more external units via one or more power supply connections.

If more than one object has been recognized within the field of view, the illumination of the indicator lights may be based on a selected one of the objects. To this end, a suitable selection rule may be implemented, e.g. based on detected sizes of the respective objects, their detected positions in the field of view, whether they are completely or only partially visible, a predetermined hierarchy and/or the like. Thus, in one embodiment, if multiple recognised objects are within the field of view of at least one of the one or more optical sensors, a suitable selection rule is applied and the indicator lights are further configured to light up in an illumination pattern in response to a determination of the location of a selected recognised object within the field of view of at least one of the one or more optical sensors. For example, in one embodiment, the process may base the illumination on the object that is closest to the centre of the field of view and/or on the largest object detected within the field of view. The user will then receive feedback that at least one recognised object is within the field of view. By moving one or more of the objects, the user may determine which object the indicator lights respond to, as the illumination pattern may then change. In alternative embodiments, or if the selection process fails to make a selection, the process may cause the lights to remain unilluminated or illuminate them in a predetermined manner such as, e.g. all lights blinking, and/or one or more colours, etc.

According to some embodiments, the determination of the location of a recognised object within the field of view of at least one of the one or more optical sensors is further signalled, e.g. to a user, by other means, such as acoustic signals/sounds, which are correlated with the illumination pattern, and which may furthermore be combined with any of the mentioned visual effects. Relevant acoustic signals should be provided in a range of frequencies that is compatible with human hearing. Thereby the interactive experience may be even further enhanced.

A construction toy comprising the sensor module can thus provide a highly interactive and stimulating play experience for the user, and in particular for children.

In some embodiments, the indicator lights are further configured to illuminate in such a way that the position of the one or more illuminated indicator lights on the sensor module correlates with the position of the recognised object within the field of view of at least one of the one or more optical sensors. In particular, the indicator lights may be configured to illuminate in such a way that the position of the one or more illuminated indicator lights on the sensor module is indicative of the position of the recognised object within the field of view of at least one of the one or more optical sensors.

For example, if the indicator lights are arranged around one or more of the one or more apertures and the recognised object is held to the left of the one or more of the one or more apertures, and within the field of view of the one or more of the one or more apertures, one or more indicator lights to the left of the one or more of the one or more apertures, as seen from the first side, i.e. from the front, will illuminate. Moving the recognised object to the right of the camera lens, while still within the viewing angle of at least one of the one or more optical sensors, would cause one or more indicator lights on the right side of the one or more of the one or more apertures, as seen from the front, to illuminate, while the indicator lights on the left side will turn off or dim. Correlating the position of the illuminated indicator lights on the sensor module with the position of the recognised object within the field of view allows for a strong association between the position of the object within the viewing angle of the sensor module and the position that the user is holding the object. This will aid the user in e.g. centring the recognised object and/or keeping the recognised object within the field of view of at least one of the one or more optical sensors and dynamically visualises the field of view in a flexible yet unambiguous manner. The correlation of the position of the indicator lights and the position of the recognised object within the field of view also enhances the accessibility of play with image recognition for younger and/or less experienced users.

In an embodiment, the indicator lights and the one or more apertures are located on a first side of the sensor module, i.e. the indicator lights and the one or more apertures are located on the same side of the sensor module. The first side of the sensor module is the side on which the one or more apertures are located, i.e. the front of the sensor module, and therefore, the indicator lights in such a position will be visible to a user looking at or towards the one or more apertures. By having the indicator lights located on the front of the sensor module, the user can see the indicator lights as well as the one or more apertures at the same time and associate the location and movement of the object to be recognised with the feedback from the indicator lights.

In an embodiment, the indicator lights of the plurality of indicator lights are arranged in a pattern around one or more of the one or more apertures. The pattern may be a geometric pattern such as the whole or part of a parallelogram, a circle, a triangle, etc. By arranging the lights around one or more of the one or more apertures, the user, such as a child, can keep its attention to a smaller area as it will already be focused on the area, where at least one of the one or more apertures are located when showing the sensor module an object to be recognised. The indicator lights will then be easily seen even if the main focus of the child is on the aperture(s) and vice versa.

In an embodiment, the indicator lights of the plurality of indicator lights are evenly distributed around one or more of the one or more apertures.

In an embodiment, four of the indicator lights of the plurality of indicator lights are arranged around one or more of the one or more apertures in such a way that positions corresponding to the four corners of a parallelogram can be illuminated. The group of parallelograms comprises rectangles, rhombuses and squares. The positions specified are only those at each of the four corners, i.e. where two of the sides meet, of the parallelogram. Other indicator lights, either from the plurality of indicator lights or from a second plurality of indicator lights, may be present also, i.e. other positions than those at the four corners are not excluded. For example, indicator lights arranged in a circle or an oval around the camera lens would have indicator lights at positions corresponding to the four corners of a parallelogram. The positioning of indicator lights at least at the four corners of a parallelogram means that the indicator lights are suited to give a representation of e.g. up/down and left/right of the field of view of the one or more optical sensors.

In an embodiment, the indicator lights of the plurality of indicator lights are further configured to adaptively illuminate in response to the status of the sensor module. By the lights being configured to adaptively illuminate is meant that they can change their illumination to suit different conditions. A status of the sensor module may be e.g. "on", streaming, updating, corrupt software, photo mode, recognition mode, loading, searching, low light, etc.

In an embodiment, the sensor module further comprises a safety light and the safety light acts together with the indicator lights to adaptively illuminate in response to the status of the sensor module. Cameras and other recording devices are generally required to have a safety light, which communicates to the user that it is recording. Usually, the safety light turns on, when the camera records images and turns off, when the camera does not record images. When the safety light and indicator lights act together to adaptively illuminate in response to a status of the sensor module, both safety light and one or more of the indicator lights may illuminate or only the safety light may illuminate or only one or more of the indicator lights may illuminate.

In an embodiment, the sensor module is adapted for communication with a processor outside the sensor module and/or with a processor comprised within the sensor module. The communication may take place over a wired or a wireless connection. If located outside the sensor module, the processor may be located within a stationary computer or within a mobile device, such as a game controller, a mobile phone, a tablet computer, or a lap-top/portable computer.

In an embodiment, the processor is configured to comprise one or more adaptive illumination modes. Each adaptive illumination mode could be related to a status of the sensor module such as e.g. "on", streaming, updating, corrupt software, photo mode, recognition mode, loading, searching, low light, etc. and be used to communicate the status of the sensor module to the user.

In an embodiment, the indicator lights are further configured to illuminate in accordance with an adaptive illumination mode being active. For example, in a recognition mode, the indicator lights light up in an illumination pattern in response to a determination of the location of a recognised object within the field of view of the one or more optical sensors. The rest of the above listed adaptive illumination modes are described further in the detailed description.

In the second aspect, the method of aiding a user using a modular toy comprising a sensor module, which comprises one or more optical sensors, one or more apertures through which light is received by the one or more optical sensors, and a plurality of indicator lights, wherein the indicator lights are configured to light up in an illumination pattern in response to a determination of the location of a recognised object within the field of view of at least one of the one or more optical sensors, the method comprises:
- capturing one or more images of the field of view of at least one of the one or more optical sensors,
- analysing the one or more images and determining if a recognised object is present in the one or more images,
- if a recognised object is present in the one or more images, illuminating one or more indicator lights in an illumination pattern.

In the second aspect, the terms and features relate to the terms and features having the same name in the first aspect and therefore the descriptions and explanations of terms and features given above apply also to the second aspect. The sensor module may be a sensor module as disclosed in any embodiment herein.

In an embodiment, the step of illuminating one or more indicator lights in an illumination pattern further comprises the position of the illuminated indicator lights on the sensor module correlating with the position of the recognised object within the field of view of at least one of the one or more optical sensors.

In an embodiment, the step of analysing the one or more images and determining if a recognised object is present in the one or more images is performed by a processor comprised within the sensor module and/or by a processor in communication with the sensor module.

### BRIEF DESCRIPTION OF THE DRAWINGS

In the following, exemplary embodiments of the invention are described in more detail with reference to the appended drawings, wherein:
FIG. 1-10 schematically illustrate a sensor module for a modular toy construction set in accordance with exemplary embodiments of the invention,
FIG. 11 is a flow diagram in accordance with exemplary embodiments of the invention.

### DETAILED DESCRIPTION

In the following various exemplary embodiments of the present sensor module and the method are described with reference to the appended drawings. The skilled person will understand that the accompanying drawings are schematic and simplified for clarity and therefore merely show details which are essential to the understanding of the invention, while other details have been left out. Like reference numerals refer to like elements throughout. Like elements will therefore not necessarily be described in detail with respect to each figure.

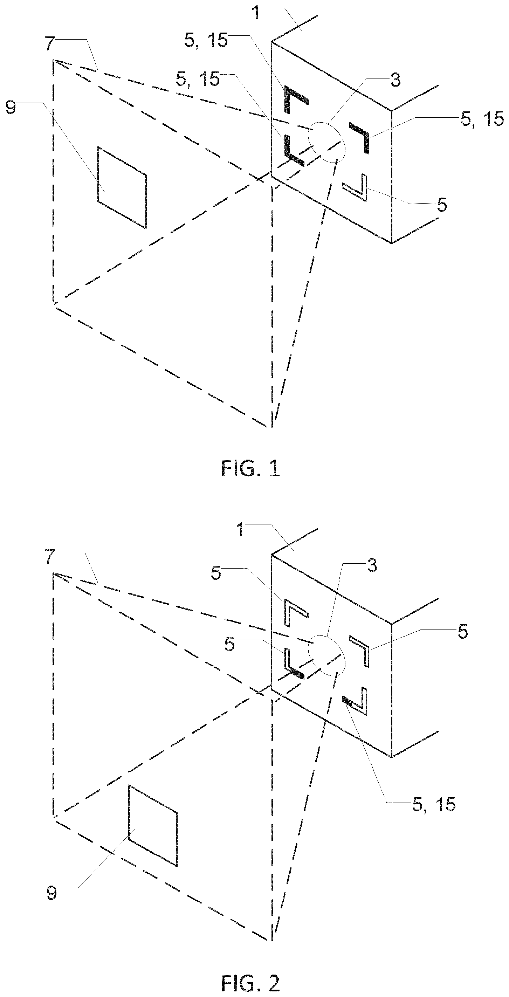

FIGS. 1 - 10 schematically illustrate a sensor module 1 for a modular toy construction set. The sensor module 1 has an aperture 3 through which light is received by one or more optical sensors, and a plurality of indicator lights 5 that are configured to light up in an illumination pattern in response to a determination of the location of a recognised object 9 within the field of view 7 of at least one or the one or more optical sensors. For example, the sensor module 1 could function as a camera and an optical sensor in the sensor module 1 could be a CCD, which receives light through a camera lens.

Each reference numeral pointing to an indicator light 5 may actually point to an assembly of several indicator lights 5, i.e. several individual LEDs. By an assembly of indicator lights 5 is meant a number of lights being positioned close together and further apart from other lights.

The figures of a sensor module 1 primarily show the module from a side, which could be referred to as the front, as this is the side where an aperture 3 is positioned.

The field of view 7, or viewing angle 7, of an optical sensor in the sensor module 1 is indicated by dashed lines, which, for illustrative purposes, end at a plane within the field of view 7 in which either an object 11 or a recognised object 9 is located. As is well known, in reality the field of view 7 may extend further beyond the plane containing the object 9, 11. When referring to directions such as up, down, left and right these are as illustrated on the page, i.e. towards the top of the page is considered the up direction, towards the left side of the page is the left direction, etc.

In figs. 1-8, 9a, 9b, and 10 the sensor module 1 has four indicator lights 5 or more than four indicator lights 5 arranged in four assemblies on the front of the sensor module 1. In the embodiments shown in figs. 1-8 the lights, or assemblies, outline the corners of a rectangle. One or more indicator lights/assemblies 5 are lit up, shown by black filling 15, in response to a determination of the location of a recognised object 9 within the field of view 7 of an optical sensor within the sensor module 1.

Fig. 1 illustrates some of the indicator lights 5 illuminating 15 in response to a recognised object 9 within the field of view 7. The recognised object 9 is in the upper-left part of the field of view 7 and therefore one or more indicator light 5 in the upper-left part of the arrangement of indicator lights are illuminated 15. In this way, the sensor module 1 provides feedback to the user such as a child, that the object has been recognised and that it is located in the upper-left part of the field of view 7.

Thus, the user looking towards the sensor module 1 is presented with information on the location of the recognised object 9 within the field of view 7 and knows that the object is not centred in the field of view, but has been recognised. This allows the user the option to change the position of the object in the field of view 7 such that it is centred, if desired.

For illustration, the object is shown in fig. 1 is presented as a rectangle, but may be any object that a processing system can recognise or be trained to recognise. The recognition may be done by a processor comprised in the sensor module 1, or the sensor module 1 may be configured to communicate with one or more processors located outside the sensor module 1.

The configuration of the indicator lights 5 and their illumination may be realised using a suitable controller.

Fig. 2 illustrates a sensor module 1 similar to that in fig. 1, but the recognised object 9 is centred horizontally in the lower part of the field of view 7. In the embodiment of the sensor module 1, the indicator lights 5 outline the corners of a rectangle, but not all of the sides of the rectangle, and the indicator lights 5 are illuminated 15 in the lower-left part towards the centre as well as in the lower-right part towards the centre of the arrangement of the plurality of indicator lights 5.

Thus, the user looking towards the sensor module 1 is presented with information on the location of the recognised object 9 within the field of view 7 and knows that the object is not centred in the field of view, but has been recognised. If the user moves the recognised object 9, for example to the upper-left part of the field of view 7 as shown in fig. 1, the indicator lights 5 will change their illumination pattern in response.

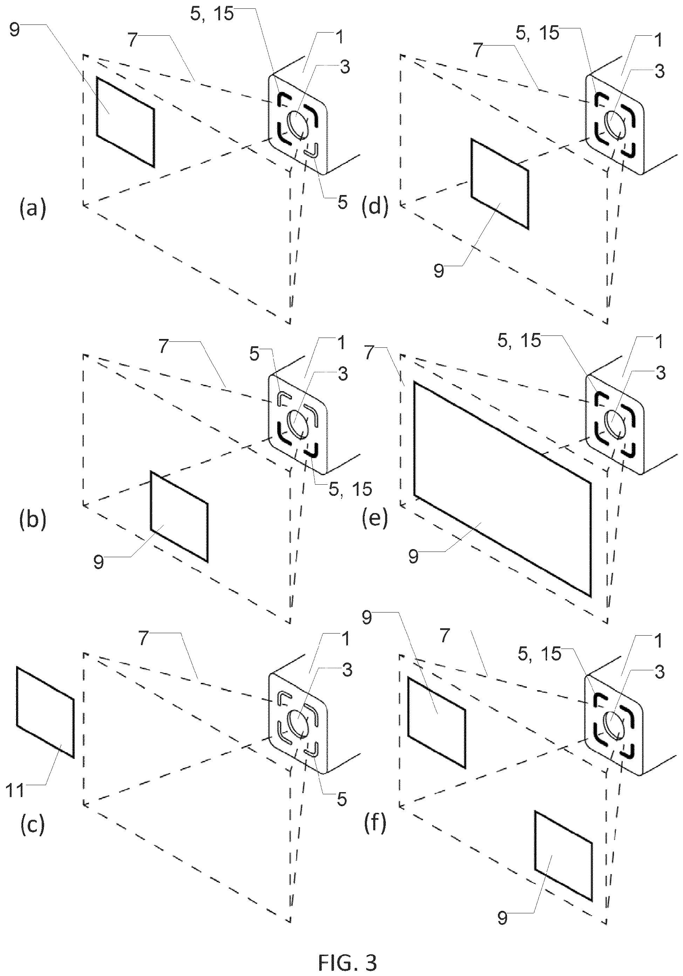

Figs. 3a-f illustrate a sensor module 1 similar to that in figs. 1 and 2. In figs. 3a, b, d-f one or more recognised objects 9 are positioned at different locations within the field of view 7 of the optical sensor 3 in the sensor module 1. In fig. 3c an object 11 is shown as being located outside of the field of view 7 of the optical sensor 3.

As a recognised object 9 is moved around within the field of view 7, the illumination pattern of the indicator lights 5 will change and thereby provide a dynamic feedback to the user. Additionally, moving a recognised object 9 out of the field of view 7 will mean that the indicator lights 5 will no longer light up in an illumination pattern in response to that object 11 as it is no longer detected by the sensor module 1, fig. 3c.

The closer to the aperture 3 a recognised object 9 is positioned, the more of the field of view 7 will be occupied by the object. As shown in fig. 3e, the recognised object 9 can take up most of the field of view 7, and still be recognised as centred in the field of view 7. If the user moves the recognised object 9 further away and off-centre, the indicator lights 5 will change their illumination pattern in response.

More than one recognisable object 9 may be presented to the sensor module 1 as shown in fig. 3f. The indicator lights 5 may be configured to light up 15 in an illumination pattern in response to all the recognised objects 9 in a similar way for each object 9, or the indicator lights could be configured to illuminate in such a way as to distinguish the illumination pattern for each recognised object 9, for example by lighting up in different colours, or intensities. The indicator lights could be configured to light up in a manner indicative of the colour of the recognised object 9, for example if an object 9 is detected as being red or reddish, the illumination pattern in response to that object 9 could be red. The indicator lights could be configured to light up in a manner indicative of the distance to the recognised object 9, for example the intensity of the illumination pattern could be correlated to the distance between the recognised object 9 and the sensor module 1. Thus, the intensity of the illumination pattern could increase when a recognised object 9 is moved closer to the sensor module 1 and decrease as the recognised object 9 is moved further away from the sensor module 1.

An active sensor, such as a LiDAR sensor could be used, alone or together with a passive sensor, such as a camera, in some embodiments of the sensor module 1.

An association between the position of the recognised object 9 in the field of view 7 of the optical sensor 3 in the sensor module 1 and the position of the recognised objects 9 location in the user's 3D environment is thereby implemented in a manner that is directly accessible. This direct and associative visualization supports intuitive understanding of the relation between the field of view 7 of the optical sensor 3 in the sensor module 1 and the 3D environment of the user. Consequently, an enhanced interactive play and learning experience is created as compared to a situation, wherein an indication of recognition of an object is not correlated in the same manner as that achieved by the particular combination of the position of the indicator lights 5 on the sensor module 1 and the illumination patterns.

With this visual feedback, a user, such as a child, holding the recognised object 9 knows that the object has been recognised and where, approximately, the recognised object 9 is within the field of view 7 of the optical sensor 3 in the sensor module 1. The child will then also know, or quickly learn, that if the recognised object 9 is moved from a recognised position to another position, it may be that it can no longer be detected by the sensor module 1. The feedback from the illumination of the indicator lights 5 thus facilitates, in a way suitable for a broad range of users, an intuitive understanding of the relationship between the field of view 7 of the sensor module 1 (actually, the field of view of the optical sensor in the sensor module 1) and its ability to recognise an object.

For example, as illustrated in fig. 3c, if the child positions or moves the recognised object 9 out of the field of view 7 of the sensor module 1, all the indicator lights 5 will be off or will turn off, respectively, and as soon as the object is moved into the field of view 7 and recognised, indicator lights 5 will again illuminate to show where in the field of view 7 of the sensor module 1 the recognised object 9 is located.

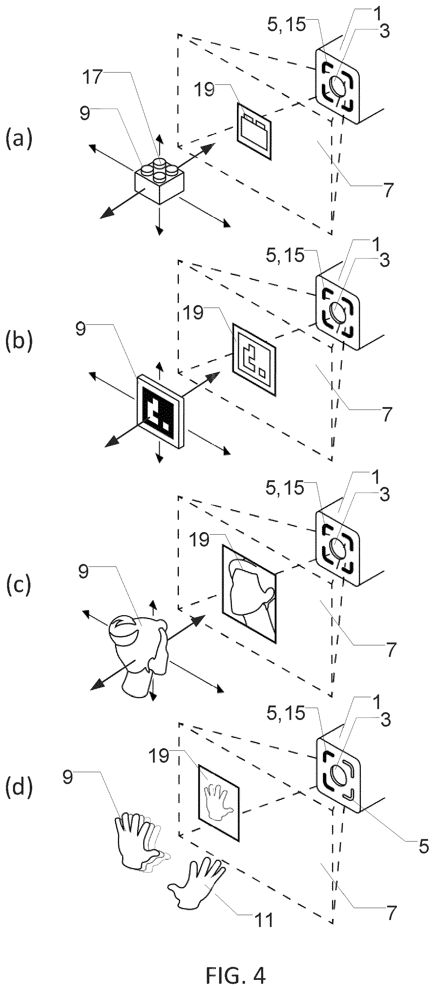

Fig. 4 illustrates a sensor module 1 and different types of objects 9 that may be recognised by the sensor module 1.

In fig. 4a the recognised object 9 is a building block for a toy construction set. The building block 9 has protruding connectors on one side and possibly connectors configured for interlocking with protruding connectors 17 on another building block on the opposite side. The sensor module 1 views the building block 9 from a side, where it can see the protruding connectors 17, and has recognised the building block 9 and determined that the building block 9 is centred within the field of view 7.

The sensor module 1 may see a projection 19 of the recognised object 9, such as a 2d projection 19 of an object on a CCD chip in a camera, and the recognition process may use this 2d projection as data for its recognition. The sensor module 1 could instead or additionally have a LiDAR sensor, which may provide 1d, 2d or 3d data. For example, the sensor module 1 may have both a camera and a simple LiDAR sensor, and use the LiDAR sensor as an additional detection sensor and/or for ranging to determine a distance between the sensor module 1 and the recognised object 9.

The user can move the building block 9 and the indicator lights 5 will light up in an illumination pattern in response to the location of the building block 9 within the field of view of the optical sensor within the sensor module 1. Thereby, the user, such as a child, is provided with easy to interpret feedback on where the building block is positioned in the field of view 7 and particularly whether the building block is nearer an edge of the field of view than the centre.

In fig. 4b the recognised object 9 is a tag and the sensor module 1 may be configured to recognise not only that it is a tag, but also that it is a specific tag. For example, the illumination pattern of the indicator lights 5 may light up in one colour to signify that the object has been recognised and in another colour to signify that the object has been recognised as being a tag. Alternatively, or additionally, the indicator lights, which are illuminated may change e.g. their intensity when the object has been recognised as being a tag.

The sensor module 1 could be configured, or later programmed, to respond to the specific tag. The sensor module 1 may be configured to provide input to or receive input from another device, via a wired or wireless connection, such as another module in the toy construction system. Thus, the sensor module 1 could be provided with instructions on how to respond to a specific tag as part of a programmable recognition system.

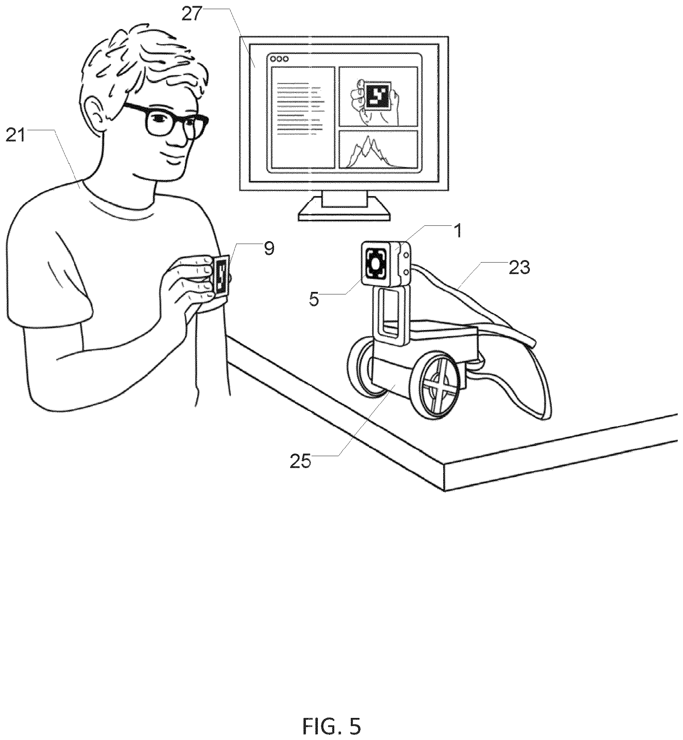

Tags may be used to provide instructions to a programmable system, see e.g. fig. 5, for example a single tag or a series of tags may be used to provide one or more such instructions, and for this purpose it is important for the user to know that a tag has been recognised. Thus, providing the user with feedback from the sensor module 1 in the form of the illumination pattern of the indicator lights 5 as disclosed herein is advantageous.

In fig. 4c the recognised object 9 is a face and the sensor module 1 may be configured to recognise not only that it is a face, but also that it is a specific face, similar to the recognition of a tag as described with respect to figure 4b.

Receiving feedback from the sensor module 1 is particularly advantageous for face recognition, where the user must look towards the aperture 3 of the sensor module 1 for face recognition. The feedback from the indicator lights 5 may then be easily seen by the user. A user, particularly a child, may not have the ability to easily understand how to centre their face, or any other object, within the field of view 7 of the sensor module 1, and therefore the feedback provided by the illumination pattern of the indicator lights 5 can be useful, or even necessary, for the user to be able to play with recognition.

In fig. 4d the recognised object 9 is a right hand shown in a recognisable way to the sensor module 1. A left hand 11, which has not been recognised, is also in the field of view 7 of the optical sensor in the sensor module 1. The indicator lights 5 to the left, when viewed by the user looking towards the side of the sensor module 1 having the indicator lights 5, are therefore illuminated 15, as the right hand is on the left side of the field of view 7, while the indicator lights 5 on the right are not illuminated.

Fig. 5 illustrates a user holding an object 9 to be recognised, such as a tag, in the field of view 7 of a sensor module 1. The sensor module 1 has a wired connection 23 that connects it electronically to a device 25, which may provide e.g. power, processing, and/or mechanical support, to the sensor module 1.

The indicator lights 5 illuminate in an illumination pattern in response to the location of the recognised object 9 being determined and thereby providing the user with feedback e.g. on the object having been recognised, the location of the object in the field of view of the sensor module, the type of object, etc.

The sensor module 1 or the device 25, which the sensor module is connected to, has transferred information on the recognised object 9 to an external display 27. The display also provides information to the user on the recognised object 9, but in the setup shown in fig. 5 the user would have to turn his head to see the information on the display 27. Thus, using the sensor module 1 means that the user can receive the feedback without the need of being able to view output from the sensor module 1 on a display 27.

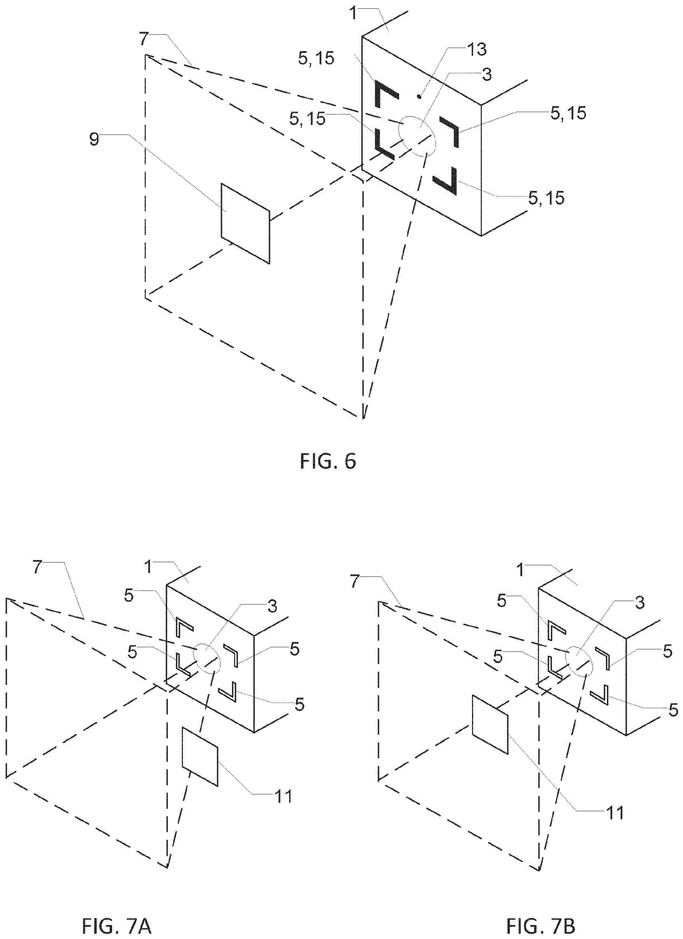

Fig. 6 illustrates a sensor module 1 having a safety light 13. Cameras are generally required to have a safety light 13, which communicates to the user when the camera records. Usually, the safety light turns on, when the camera records images and turns off, when the camera does not record images. Therefore, the user can know in the when the sensor module 1 is turned on and is recording images. The safety light 13 is not shown in the other figures as it is not relevant for the description of those, but all embodiments of the sensor module 1 may have a safety light 13.

The safety light 13 may be further utilised, possibly together with the indicator lights 5, to show different states of the sensor module 1 such as e.g. "on", streaming, updating, corrupt software, photo mode, recognition mode, loading, searching, low light, etc. by having the safety light 13 blink, pulse, and/or light up in different colours, etc.

The sensor module 1 may be adapted for communication with a processor outside the sensor module 1 or comprised within the sensor module 1 and the processor (not shown) can be configured to have various adaptive illumination modes.

The indicator lights 5 can be further configured to adaptively illuminate in response to the status of the sensor module 1. Thus, the safety light 13 and the indicator lights 5 can act together to communicate a status of the sensor module. For example, the safety light 13 could pulse to communicate streaming, it could pulse in red, green, blue to communicate that it is updating, it could pulse in purple to communicate that the uploaded software is corrupt, etc.

The safety light 13 and the indicator lights 5 could communicate together, for example by the safety light 13 and the indicator lights 5 all blinking synchronously to communicate a photo mode, wherein the sensor module 1 is used to take a photo.

In a recognition mode the sensor module 1 is analysing the images it records of its field of view 7 to try and find objects it recognises. In the recognition mode, the indicator lights 5 will illuminate in response to a determination of the location of a recognised object 9 within the field of view 7 of the sensor module 1 and the safety light 13 may light up in e.g. green to communicate that the recognition mode is the active adaptive illumination mode as well as communicating that the camera is recording.

The indicator lights 5 could light up one at a time to communicate that the sensor module 1 is loading. For example, if the indicator lights 5 are arranged around the aperture 3, which may be a camera lens, the indicator lights 5 could illuminate one after another in order of position around the aperture 3 to produce a well-known swirling motion indicating loading. A similar pattern could be used to indicate a searching mode, wherein the sensor module 1 is searching for an object, e.g. a ball or a building block. In the searching mode, the indicator lights 5 could again illuminate one after another in order of position around the aperture 3, but much more slowly such that the user will not perceive the illumination pattern as a swirling motion.

The use of indicator lights 5 as disclosed herein may advantageously be used in systems, where images recorded by the sensor module 1 are supplied to a neural network that can be trained to recognise objects or to recognise new objects. Photos of the new objects to train the neural network with could be taken during a photo mode as described above.

It may also be possible for the user to program an adaptive illumination mode of the indicator lights 5, possibly a mode, where the safety light 13 is part of the adaptive illumination.

With the feedback provided by the sensor module 1 as described herein, a user, such as a child, may experiment with the orientation of an object 11 such as rotating, turning and twisting a recognised object 9 to learn the extent to which the sensor module 1 is able to recognise the object 9 as the object is manipulated in 3D. Further, the child may move a recognised object 9 around within the field of view 7 and out of the field of view 7 to receive feedback on the sensor module's 1 ability to track the recognised object 9.

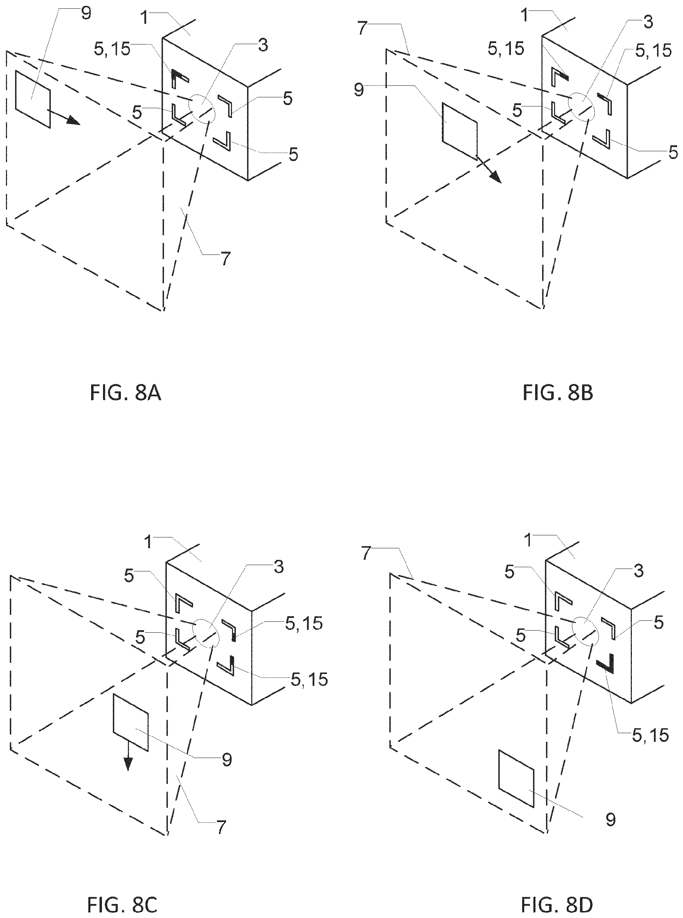

Figs. 8A - 8D illustrate a recognised object 9 being moved around within the field of view 7 or the sensor module 1 being moved such that the recognised object 9 changes position within the field of view 7. The illumination of the indicator lights 5 changes in each figure to reflect the movement of the recognised object 9 within the field of view 7.

In figs. 7A and 7B the sensor modules 1 each have four indicator lights 5 or more than four indicator lights 5 arranged in four assemblies on the front of the sensor module 1. In fig. 7A an object 11 is located outside of the field of view 7 of the sensor module 1. In this case, no indicator lights 5 are illuminated. Likewise, in fig. 7B, where an object 11 that the sensor module 1 does not recognise is within its field of view 7, no indicator lights 5 are illuminated.

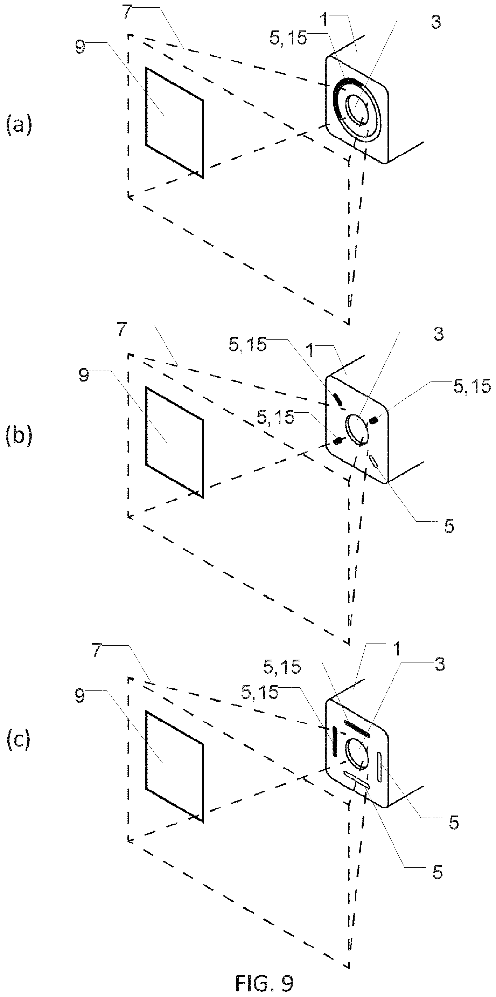

Figs. 9a - 9c illustrate examples of how the indicator lights 5 might be shaped and arranged around one or more central apertures 3 and how the different indicator light arrangements might illuminate in response to a recognised object 9 within the field of view 7.

In fig. 9a, indicator lights 5 are arranged in a circle around the aperture 3. A recognised object 9 is located in the upper left part of the field of view 7 of the sensor module 1 and therefore indicator lights 5 positioned above and to the left of the aperture 3 are illuminated 15 (illumination being shown as filled in black).

In fig. 9b, indicator lights 5 are arranged around the aperture 3 in a rectangle towards the corners of the side of the sensor module 1 on which the lights 5 and aperture 3 are located. A recognised object 9 is centred in the upper-left part of the field of view 7 of the sensor module 1 and therefore the indicator lights 5 on the left and on the top are illuminated 15 (illumination being shown as filled in black).

In fig. 9c, indicator lights 5 are arranged evenly around the aperture 3 in four straight lines outlining the sides, but not the corners, of a rectangle, each side being parallel to a side of the sensor module 1. Each line of indicator lights 5 may comprise a number of indicator lights 5.

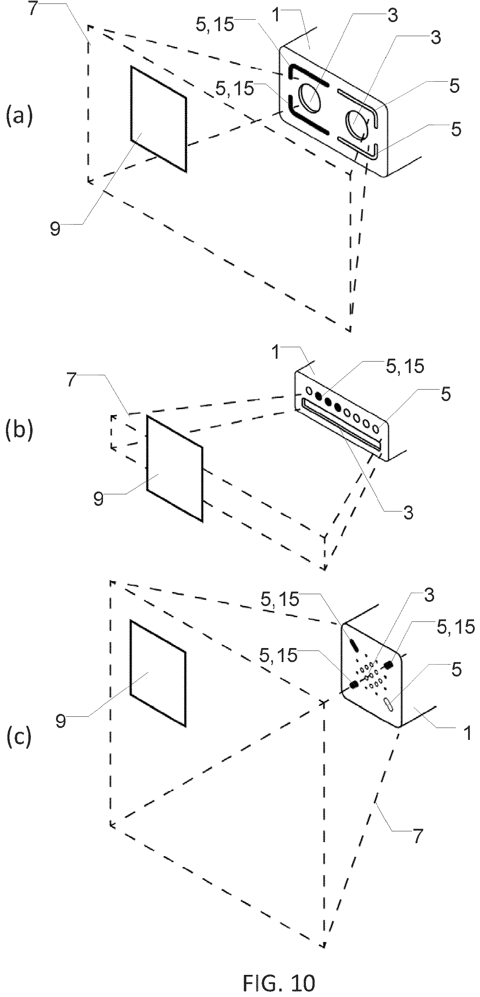

Figs. 10a-c illustrate examples of how the indicator lights 5 might be shaped and arranged with respect to a plurality of apertures 3 and how the different indicator light arrangements might illuminate in response to a recognised object 9 within the field of view 7.

In fig. 10a, the sensor module 1 has four indicator lights 5 or more than four indicator lights 5 arranged in four assemblies, which outline the corners of a rectangle and which are arranged around two apertures 3. Two of the indicator lights/assemblies 5 are illuminated 15, shown by black filling, in response to a determination of the location of a recognised object 9 within the field of view 7 of an optical sensor within the sensor module 1.

In fig. 10b, the aperture 3 is elongated and the indicator lights 5 are arranged in a line above the aperture 3. In this embodiment, the indicator lights are arranged in a 1D pattern rather than in a 2D pattern, and therefore, they can only indicate a 1-dimensional location of a recognised object 9 within the field of view 7 of the sensor module 1.

In fig. 10c the indicator lights 5 are arranged relative to each other similarly to those in the embodiment in fig. 9b. The indicator lights 5 are arranged around a plurality of apertures 3, which may be the apertures of a LiDAR sensor.

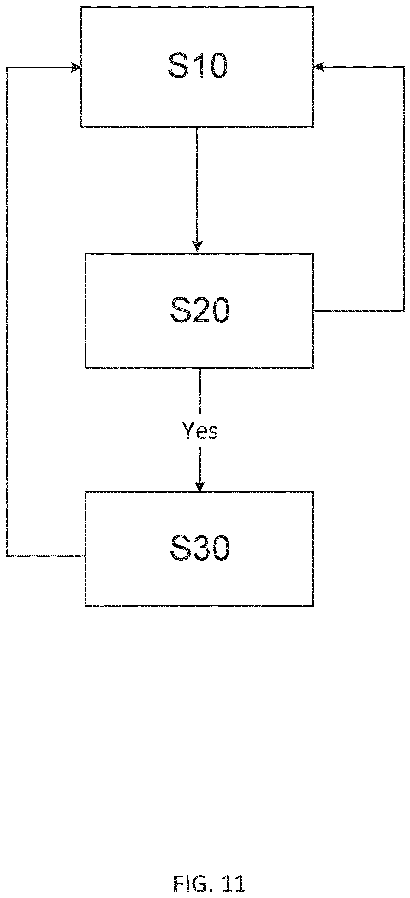

Fig. 11 shows a flow diagram of a method of aiding a user, such as a child, using a modular toy comprising a sensor module 1 as described herein. The sensor module 1 has one or more optical sensors, one or more apertures 3 through which light is received by the one or more optical sensors, and a plurality of indicator lights 5, where the indicator lights 5 are configured to light up in an illumination pattern in response to a determination of the location of a recognised object 9 within the field of view 7 of at least one or the optical sensors.

In step S10 one or more images of the field of view 7 of an optical sensor in the sensor module 1 are captured.

In step S20 the one or more images captured in step S10 are analysed and it is determined whether a recognised object 9 is present in the one or more images captured. The analysis of the one or more images and the determination can be done by a processor within the sensor module or a processor that is in communication with the sensor module. The communication between the sensor module 1 and the processor may be wired or wireless.

If a recognised object 9 is present in the one or more images captured, the process moves on to step S30, wherein one or more indicator lights 5 are illuminated in an illumination pattern. Preferably, the position of the illuminated indicator lights 5 on the sensor module 1 correlates with the position of the recognised object 9 within the field of view 7 of an optical sensor in the sensor module 1.

Whether or not a recognised object 9 is determined to be within the field of view 7 of the sensor module 1, the process may repeat by returning to step S10.

### LIST OF REFERENCES

- 1: Sensor module for a modular toy construction set
- 3: Aperture for one or more optical sensors
- 5: Indicator light(s)
- 7: Field of view/viewing angle
- 9: Recognised object
- 11: Object
- 13: Safety light
- 15: Illuminated indicator light(s)
- 17: Protruding building block connectors
- 19: Projection
- 21: User
- 23: Wired connection
- 25: Device
- 27: Display

## Claims

1. A sensor module (1) for a modular toy construction set, the sensor module comprising one or more optical sensors, and one or more apertures (3) through which light is received by the one or more optical sensors,
**characterized by** the sensor module further comprising a plurality of separate indicator lights (5), wherein the indicator lights are configured to light up in an illumination pattern in response to a determination of the location of a recognised object (9) within the field of view (7) of at least one of the one or more optical sensors.

2. A sensor module according to claim 1, wherein the one or more optical sensors comprises an active sensor, such as a LiDAR sensor, and/or the one or more optical sensors comprises a passive sensor, such as a camera.

3. A sensor module according to any of the previous claims, wherein the separate indicator lights are shaped and sized such that they are readily perceivable as separate, individual indicator lights by a user (21).

4. A sensor module according to any of the previous claims, wherein the indicator lights are further configured to illuminate in such a way that the position of the one or more illuminated indicator lights (15) on the sensor module correlates with the position of the recognised object within the field of view of at least one of the one or more optical sensors.

5. A sensor module according to any of the previous claims, wherein the indicator lights and the one or more apertures are located on a first side of the sensor module, and/or wherein the indicator lights of the plurality of indicator lights are arranged in a pattern around one or more of the one or more apertures.

6. A sensor module according to any of the previous claims, wherein four of the indicator lights of the plurality of indicator lights are arranged around one or more of the one or more apertures in such a way that positions corresponding to the four corners of a parallelogram can be illuminated.

7. A sensor module according to any of the previous claims, wherein at least one of the dimensions of any one of the indicator lights is greater than or equal to 0.5 mm, such as greater than or equal to 1 mm, such as greater than or equal to 2 mm, such as greater than or equal to 3 mm, and/or
wherein the separate indicator lights are spaced apart from each other by at least 0.5 mm, such as at least 1 mm, at least 2 mm, or at least 3 mm.

8. A sensor module according to any of the previous claims, wherein the indicator lights of the plurality of indicator lights are further configured to adaptively illuminate in response to the status of the sensor module.

9. A sensor module according to claim 8, wherein the sensor module further comprises a safety light (13) and the safety light acts together with the indicator lights to adaptively illuminate in response to the status of the sensor module.

10. A sensor module according to any of the previous claims, wherein the sensor module is adapted for communication with a processor outside the sensor module and/or with a processor comprised within the sensor module.

11. A sensor module according to claim 10, wherein the processor is configured to comprise one or more adaptive illumination modes.

12. A sensor module according to claim 11, wherein the indicator lights are further configured to illuminate in accordance with an adaptive illumination mode being active.

13. A method of aiding a user of a modular toy comprising a sensor module, the sensor module comprising one or more optical sensors, one or more apertures through which light is received by the one or more optical sensors, and a plurality of indicator lights, wherein the indicator lights are configured to light up in an illumination pattern in response to a determination of the location of a recognised object within the field of view of at least one of the one or more optical sensors, the method comprising:
- capturing one or more images of the field of view of at least one of the one or more optical sensors,
- analysing the one or more images and determining if a recognised object is present in the one or more images,
- if a recognised object is present in the one or more images, illuminating one or more indicator lights in an illumination pattern.

14. A method of aiding a user playing with a modular toy according to claim 13, wherein the step of illuminating one or more indicator lights in an illumination pattern further comprises the position of the illuminated indicator lights on the sensor module correlating with the position of the recognised object within the field of view of at least one of the one or more optical sensors.

15. A method of aiding a user playing with a modular toy according to any of claims 13 - 14, wherein the step of analysing the one or more images and determining if a recognised object is present in the one or more images is performed by a processor comprised within the sensor module and/or by a processor in communication with the sensor module.

## Patentansprüche

1. Sensormodul (1) für einen modularen Spielzeugbausatz, wobei das Sensormodul einen oder mehrere optische Sensoren und eine oder mehrere Öffnungen (3) umfasst, durch die Licht von dem einen oder den mehreren optischen Sensoren empfangen wird,
**dadurch gekennzeichnet, dass** das Sensormodul weiter eine Vielzahl separater Anzeigenleuchten (5) umfasst, wobei die Anzeigenleuchten dazu konfiguriert sind, als Reaktion auf eine Bestimmung des Orts eines erkannten Objekts (9) innerhalb des Sichtfeldes (7) mindestens eines des einen oder der mehreren optischen Sensoren in einem Beleuchtungsmuster aufzuleuchten.

2. Sensormodul nach Anspruch 1, wobei der eine oder die mehreren optischen Sensoren einen aktiven Sensor, wie beispielsweise einen LiDAR-Sensor, umfassen, und/oder der eine oder die mehreren optischen Sensoren einen passiven Sensor, wie eine Kamera, umfassen.

3. Sensormodul nach einem der vorstehenden Ansprüche, wobei die einzelnen Anzeigenleuchten derart geformt und bemessen sind, dass sie von einem Benutzer (21) ohne Weiteres als separate, einzelne Anzeigenleuchten wahrnehmbar sind.

4. Sensormodul nach einem der vorstehenden Ansprüche, wobei die Anzeigenleuchten weiter dazu konfiguriert sind, derart aufzuleuchten, dass die Position der einen oder mehreren leuchtenden Anzeigenleuchten (15) auf dem Sensormodul mit der Position des erkannten Objekts innerhalb des Sichtfeldes von mindestens einem des einen oder der mehreren optischen Sensoren korreliert.

5. Sensormodul nach einem der vorstehenden Ansprüche, wobei sich die Anzeigenleuchten und die eine oder mehreren Öffnungen an einer ersten Seite des Sensormoduls befinden, und/oder wobei die Anzeigenleuchten der Vielzahl von Anzeigenleuchten in einem Muster um eine oder mehrere der einen oder mehreren Öffnungen eingerichtet sind.

6. Sensormodul nach einem der vorstehenden Ansprüche, wobei vier der Anzeigenleuchten der Vielzahl von Anzeigenleuchten um eine oder mehrere der einen oder mehreren Öffnungen herum derart eingerichtet sind, dass Positionen beleuchtet werden können, die den vier Ecken eines Parallelogramms entsprechen.

7. Sensormodul nach einem der vorstehenden Ansprüche, wobei mindestens eine der Abmessungen einer der Anzeigenleuchten größer oder gleich 0,5 mm, wie größer oder gleich 1 mm, wie größer oder gleich 2 mm, wie größer oder gleich 3 mm ist, und/oder
wobei die einzelnen Anzeigenleuchten voneinander um mindestens 0,5 mm, wie mindestens 1 mm, mindestens 2 mm oder mindestens 3 mm beabstandet sind.

8. Sensormodul nach einem der vorstehenden Ansprüche, wobei die Anzeigenleuchten der Vielzahl von Anzeigenleuchten weiter dazu konfiguriert sind, als Reaktion auf den Status des Sensormoduls adaptiv aufzuleuchten.

9. Sensormodul nach Anspruch 8, wobei das Sensormodul weiter eine Sicherheitsleuchte (13) umfasst und die Sicherheitsleuchte zusammen mit den Anzeigenleuchten wirkt, um als Reaktion auf den Status des Sensormoduls adaptiv aufzuleuchten.

10. Sensormodul nach einem der vorstehenden Ansprüche, wobei das Sensormodul für Kommunikation mit einem Prozessor außerhalb des Sensormoduls und/oder mit einem in dem Sensormodul enthaltenen Prozessor angepasst ist.

11. Sensormodul nach Anspruch 10, wobei der Prozessor dazu konfiguriert ist, einen oder mehrere adaptive Beleuchtungsmodi zu umfassen.

12. Sensormodul nach Anspruch 11, wobei die Anzeigenleuchten weiter dazu konfiguriert sind, gemäß einem aktiven adaptiven Beleuchtungsmodus aufzuleuchten.

13. Verfahren zum Unterstützen eines Benutzers eines modularen Spielzeugs, das ein Sensormodul umfasst, wobei das Sensormodul einen oder mehrere optische Sensoren, eine oder mehrere Öffnungen, durch die Licht von dem einen oder den mehreren optischen Sensoren empfangen wird, und eine Vielzahl von Anzeigenleuchten umfasst, wobei die Anzeigenleuchten dazu konfiguriert sind, als Reaktion auf eine Bestimmung des Orts eines erkannten Objekts innerhalb des Sichtfeldes mindestens eines des einen oder der mehreren optischen Sensoren in einem Beleuchtungsmuster aufzuleuchten, wobei das Verfahren Folgendes umfasst:
- Aufnehmen eines oder mehrerer Bilder des Sichtfeldes mindestens eines des einen oder der mehreren optischen Sensoren,
- Analysieren des einen oder der mehreren Bilder und Bestimmen, ob ein erkanntes Objekt in dem einen oder den mehreren Bildern vorhanden ist,
- wenn in dem einen oder den mehreren Bildern ein erkanntes Objekt vorhanden ist, Erleuchten einer oder mehrerer Anzeigenleuchten in einem Beleuchtungsmuster.

14. Verfahren zum Unterstützen eines Benutzers beim Spielen mit einem modularen Spielzeug nach Anspruch 13, wobei der Schritt des Erleuchtens einer oder mehrerer Anzeigenleuchten in einem Beleuchtungsmuster weiter umfasst, dass die Position der leuchtenden Anzeigenleuchten auf dem Sensormodul mit der Position des erkannten Objekts innerhalb des Sichtfeldes von mindestens einem des einen oder der mehreren optischen Sensoren korreliert.

15. Verfahren zum Unterstützen eines Benutzers beim Spielen mit einem modularen Spielzeug nach einem der Ansprüche 13 bis 14, wobei der Schritt des Analysierens des einen oder der mehreren Bilder und des Bestimmens, ob ein erkanntes Objekt in dem einen oder den mehreren Bildern vorhanden ist, von einem Prozessor, der in dem Sensormodul umfasst ist und/oder durch einen Prozessor in Kommunikation mit dem Sensormodul durchgeführt wird.

## Revendications

1. Module de capteur (1) pour un ensemble de construction de jouet modulaire, le module de capteur comprenant un ou plusieurs capteurs optiques, et un ou plusieurs orifices (3) par lesquels de la lumière est reçue par les un ou plusieurs capteurs optiques,
**caractérisé en ce que** le module de capteur comprend en outre une pluralité de lampes-témoins distinctes (5), dans lequel les lampes-témoins sont configurées pour s'allumer selon un motif d'éclairage à la suite d'une détermination de l'emplacement d'un objet reconnu (9) dans le champ de vision (7) d'au moins un des un ou plusieurs capteurs optiques.

2. Module de capteur selon la revendication 1, dans lequel les un ou plusieurs capteurs optiques comprennent un capteur actif, tel qu'un capteur LiDAR et/ou les un ou plusieurs capteurs optiques comprennent un capteur passif, tel qu'une caméra.

3. Module de capteur selon l'une quelconque des revendications précédentes, dans lequel les lampes-témoins distinctes sont formées et dimensionnées de telle sorte qu'elles puissent facilement être perçues par un utilisateur (21) comme des lampes-témoins individuelles distinctes.

4. Module de capteur selon l'une quelconque des revendications précédentes, dans lequel les lampes-témoins sont en outre configurées pour éclairer de telle manière que la position des une ou plusieurs lampes-témoins éclairées (15) sur le module de capteur soit en corrélation avec la position de l'objet reconnu dans le champ de vision d'au moins un des un ou plusieurs capteurs optiques.

5. Module de capteur selon l'une quelconque des revendications précédentes, dans lequel les lampes-témoins et les un ou plusieurs orifices sont situés sur un premier côté du module de capteur et/ou dans lequel les lampes-témoins de la pluralité de lampes-témoins sont agencées selon un motif autour d'un ou de plusieurs des un ou plusieurs orifices.

6. Module de capteur selon l'une quelconque des revendications précédentes, dans lequel quatre des lampes-témoins de la pluralité de lampes-témoins sont agencées autour d'un ou de plusieurs des un ou plusieurs orifices de telle manière que des positions correspondant aux quatre coins d'un parallélogramme puissent être éclairées.

7. Module de capteur selon l'une quelconque des revendications précédentes, dans lequel au moins une des dimensions de l'une quelconque des lampes-témoins est supérieure ou égale à 0,5 mm, telle que supérieure ou égale à 1 mm, telle que supérieure ou égale à 2 mm, telle que supérieure ou égale à 3 mm et/ou
dans lequel les lampes-témoins distinctes sont espacées les unes des autres d'au moins 0,5 mm, tel que d'au moins 1 mm, d'au moins 2 mm ou d'au moins 3 mm.

8. Module de capteur selon l'une quelconque des revendications précédentes, dans lequel les lampes-témoins de la pluralité de lampes-témoins sont en outre configurées pour éclairer de manière adaptative en réponse à l'état du module de capteur.

9. Module de capteur selon la revendication 8, dans lequel le module de capteur comprend en outre une lampe de sécurité (13) et la lampe de sécurité agit conjointement avec les lampes-témoins pour éclairer de manière adaptative en réponse à l'état du module de capteur.

10. Module de capteur selon l'une quelconque des revendications précédentes, dans lequel le module de capteur est adapté pour communiquer avec un processeur extérieur au module de capteur et/ou avec un processeur intégré dans le module de capteur.

11. Module de capteur selon la revendication 10, dans lequel le processeur est configuré pour comprendre un ou plusieurs modes d'éclairage adaptatifs.

12. Module de capteur selon la revendication 11, dans lequel les lampes-témoins sont en outre configurées pour éclairer selon un mode d'éclairage adaptatif actif.

13. Procédé d'aide à un utilisateur d'un jouet modulaire comprenant un module de capteur, le module de capteur comprenant un ou plusieurs capteurs optiques, un ou plusieurs orifices par lesquels de la lumière est reçue par les un ou plusieurs capteurs optiques, et une pluralité de lampes-témoins, dans lequel les lampes-témoins sont configurées pour s'allumer selon un motif d'éclairage à la suite d'une détermination de l'emplacement d'un objet reconnu dans le champ de vision d'au moins un des capteurs optiques, le procédé comprenant :
- la capture d'une ou de plusieurs images du champ de vision d'au moins un des un ou plusieurs capteurs optiques,
- l'analyse des une ou plusieurs images et la détermination pour savoir si un objet reconnu est présent dans les une ou plusieurs images,
- si un objet reconnu est présent dans les une ou plusieurs images, l'éclairage d'une ou de plusieurs lampes-témoins selon un motif d'éclairage.

14. Procédé d'aide à un utilisateur jouant avec un jouet modulaire selon la revendication 13, dans lequel l'étape d'éclairage d'une ou de plusieurs lampes-témoins selon un motif d'éclairage comprend en outre la position des lampes-témoins éclairées sur le module de capteur en corrélation avec la position de l'objet reconnu dans le champ de vision d'au moins un des un ou plusieurs capteurs optiques.

15. Procédé d'aide à un utilisateur jouant avec un jouet modulaire selon l'une quelconque des revendications 13-14, dans lequel l'étape d'analyse des une ou plusieurs images et de détermination si un objet reconnu est présent dans les une ou plusieurs images est réalisée par un processeur intégré dans le module de capteur et/ou par un processeur en communication avec le module capteur.
